# EUROPEAN PATENT APPLICATION

(11) **EP 4 183 833 A1**
(43) Date of publication of application: **24.05.2023**
(21) Application number: 21842931.4
(22) Date of filing: 13.07.2021
(51) Int. Cl.: C08L 67/00, A01P 3/00, A01N 43/40, A01N 25/00, A01N 25/10

(54) **COMPOSITION CONTAINING POLYESTER RESIN**

(30) Priority: 14.07.2020 JP 2020120845
(71) Applicant: Sumitomo Seika Chemicals Co., Ltd., Kako-gun, Hyogo 675-0145 (JP)
(72) Inventor: KAKUTAKA, Ikumi, Himeji-shi, Hyogo 672-8076 (JP); HASHIMOTO, Naoki, Himeji-shi, Hyogo 672-8076 (JP)
(74) Representative: Vossius & Partner Patentanwälte Rechtsanwälte mbB
(86) International application number: PCT/JP2021/026204
(87) International publication number: WO 2022/014549

(57) **Abstract**

Provided is an aqueous polyester resin dispersion composition that maintains high rot-proofness and adhesiveness over a long period of time. More specifically, provided is an aqueous polyester resin dispersion composition containing pyrithione or a salt thereof.

## Description

### Technical Field

The present disclosure relates to compositions containing polyester resin. The content of the literature disclosed in the present specification is incorporated by reference in its entirety.

### Background Art

Aqueous polyester resin dispersion compositions have various applications, for example, in binders and fiber treatment agents.

### Citation List

### Patent Literature

PTL 1: JP2001-310944A

### Summary of Invention

### Technical Problem

It is preferred that aqueous polyester resin dispersion compositions for use in, for example, binders or fiber treatment agents, maintain high rot-proofness and adhesiveness over a long period of time.

The present inventors conducted extensive research to provide an aqueous polyester resin dispersion composition that maintains high rot-proofness and adhesiveness over a long period of time. They found that it is often the case that high adhesiveness results in poor rot-proofness, whereas increased rot-proofness leads to poor adhesiveness (i.e., there appears to be a trade-off relationship between adhesiveness and rot-proofness).

After obtaining this finding, the inventors conducted further research to obtain an aqueous polyester resin dispersion composition that maintains high rot-proofness and adhesiveness over a long period of time.

### Solution to Problem

The present inventors found the possibility of obtaining an aqueous polyester resin dispersion composition that maintains high rot-proofness and adhesiveness over a long period of time by adding a specific preservative to an aqueous polyester resin dispersion composition, and made further improvements.

The present disclosure includes, for example, the subject matter described in the following items.

### Item 1.

An aqueous polyester resin dispersion composition comprising pyrithione or a salt thereof.

### Item 2.

The composition according to Item 1, comprising the pyrithione or a salt thereof in an amount of 100 to 1000 ppm. Item 3.

The composition according to Item 1 or 2, further comprising polyvinyl alcohol.

### Item 4.

The composition according to any one of Items 1 to 3, wherein the polyester is a copolymer of a dicarboxylic acid with a glycol.

### Item 5.

The composition according to Item 4, wherein the dicarboxylic acid is at least one member selected from the group consisting of terephthalic acid, isophthalic acid, and orthophthalic acid, and the glycol is at least one member selected from the group consisting of ethylene glycol, diethylene glycol, polyethylene glycol, 1,3-propanediol, 1,4-butanediol, and 1,6-hexanediol.

### Item 6.

The composition according to any one of Items 1 to 5, wherein the polyester resin is a resin containing polyester or a resin containing polyester and polyvinyl alcohol.

### Advantageous Effects of Invention

Aqueous polyester resin dispersion compositions that maintain high rot-proofness and adhesiveness over a long period of time are provided. The aqueous polyester resin dispersion compositions are useful in various applications, such as binders or fiber treatment agents.

### Description of Embodiments

Embodiments encompassed by the present disclosure are described in more detail below. The present disclosure preferably includes, but is not limited to, an aqueous polyester resin dispersion composition and the use thereof. The present disclosure includes all matters that are disclosed in the present specification, and that can be recognized by a person skilled in the art.

The aqueous polyester resin dispersion composition encompassed by the present disclosure contains pyrithione or a salt thereof. In the present specification, the aqueous polyester resin dispersion composition encompassed by the present disclosure may be referred to as "the composition of the present disclosure."

The composition of the present disclosure contains pyrithione or a salt thereof. Pyrithione or a salt thereof is known to be usable as a preservative.

Pyrithione is a compound represented by the following structural formula.

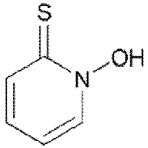

The salts of pyrithione are preferably metal salts. More specifically, the salts of pyrithione are preferably sodium pyrithione, potassium pyrithione, magnesium pyrithione, barium pyrithione, bismuth pyrithione, strontium pyrithione, copper pyrithione, zinc pyrithione, cadmium pyrithione, and zirconium pyrithione. Of these, sodium pyrithione, potassium pyrithione, and zinc pyrithione are preferable. The following describes the structural formulas of sodium pyrithione and copper pyrithione. Sodium pyrithione is also referred to as "sodium 2-pyridinethiol 1-oxide."

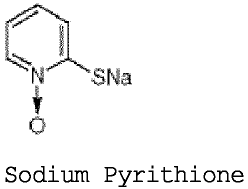

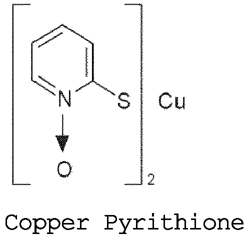

The pyrithione or a salt thereof can be used singly or in a combination of two or more.

The composition of the present disclosure preferably contains pyrithione or a salt thereof in an amount of, for example, 100 to 1000 ppm. The upper limit or the lower limit of the range may be, for example, 150, 200, 250, 300, 350, 400, 450, 500, 550, 600, 650, 700, 750, 800, 850, 900, or 950 ppm. The range may be, for example, 150 to 950 ppm.

The composition of the present disclosure preferably further contains polyvinyl alcohol. The polyvinyl alcohol preferably has, for example, a weight average molecular weight of about 500 to 2500. The upper limit or the lower limit of the range of the weight average molecular weight may be, for example, 600, 700, 800, 900, 1000, 1100, 1200, 1300, 1400, 1500, 1600, 1700, 1800, 1900, 2000, 2100, 2200, 2300, or 2400. For example, the weight average molecular weight may be 600 to 2400. Polyvinyl alcohol with a degree of saponification of 70 to 99 mol% is also preferable. Specifically, polyvinyl alcohol is produced by saponifying a polyvinyl acetate, and polyvinyl alcohol with a degree of this saponification of 70 to 99 mol% is preferable. The upper limit or the lower limit of the degree of saponification may be, for example, 71, 72, 73, 74, 75, 76, 77, 78, 79, 80, 81, 82, 83, 84, 85, 86, 87, 88, 89, 90, 91, 92, 93, 94, 95, 96, 97, or 98 mol%. For example, the degree of saponification may be 71 to 98 mol%.

When the composition of the present disclosure contains polyvinyl alcohol, the composition preferably contains the polyvinyl alcohol in an amount of, for example, 0.5 to 20 parts by mass per 100 parts by mass of the polyester resin. The upper limit or the lower limit of the range may be, for example, 1, 2, 3, 4, 5, 6, 7, 8, 9, 10, 11, 12, 13, 14, 15, 16, 17, 18, or 19 parts by mass. For example, the range may be 1 to 19 parts by mass.

The polyester resin can be any resin that contains polyester. The polyester resin may be a resin that contains polyester and polyvinyl alcohol. Such a resin can be prepared, for example, by melt-kneading polyester and polyvinyl alcohol. The melt-kneading can be performed by using, for example, an extruder (in particular, a twin-screw extruder). The polyvinyl alcohol to be contained in the polyester resin may be preferably, for example, the same as those preferably contained in the composition of the present disclosure. A polyester resin produced by melt-kneading at a temperature equivalent to or higher than the melting point of the polyester for use and lower than the melting point of the polyvinyl alcohol for use can consist essentially of the polyester.

When the polyester resin contains polyester and polyvinyl alcohol, the content of the polyester and the polyvinyl alcohol is the following: preferably 0.1 to 5 parts by mass of the polyvinyl alcohol per 100 parts by mass of the polyester. The upper limit or the lower limit of the range may be 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, or 4.9 parts by mass. For example, the range may be 0.2 to 4 parts by mass.

The polyester resin preferably contains polyester in an amount of 90 to 100 mass%. The upper limit or the lower limit of the range may be, for example, 91, 92, 93, 94, 95, 96, 97, 98, or 99 mass%. For example, the range may be 91 to 99 mass%. The polyester resin may contain another resin in addition to the polyester and polyvinyl alcohol to the extent that the effects of the composition of the present disclosure are not impaired. For example, the polyester resin may contain a common thermoplastic resin (e.g., a polyolefin, a copolymer thereof, a polyamide, and a polyurethane) other than polyester. The polyester resin may also contain a polymeric emulsifier (an ethylene oxide-propylene oxide copolymer, polyvinyl ether, polyacrylamide, or hydroxyethyl cellulose) other than polyvinyl alcohol, a preservative, etc. These components can be mixed with the polyester resin, for example, in the melt-kneading stage.

The polyester resin is preferably, although not limited to, a resin consisting essentially of polyester, or a resin consisting of polyester and polyvinyl alcohol, with a resin consisting essentially of polyester being more preferable.

The polyester is preferably a copolymer of a dicarboxylic acid with a glycol. The copolymer can be obtained by condensation polymerization between a dicarboxylic acid and a glycol. Condensation polymerization can be performed, for example, according to a known method or a method easily conceivable from known methods.

The polyester preferably has a melting point of about 50 to 200°C. The upper limit or the lower limit of the melting point may be, for example, 60, 70, 80, 90, 100, 110, 120, 130, 140, 150, 160, 170, 180, or 190°C. For example, the melting point may be 60 to 190°C. The polyester preferably has a weight average molecular weight of about 5000 to 60000. The upper limit or the lower limit of the range may be, for example, 6000, 7000, 8000, 9000, 10000, 11000, 12000, 13000, 14000, 15000, 16000, 17000, 18000, 19000, 20000, 21000, 22000, 23000, 24000, 25000, 26000, 27000, 28000, 29000, 30000, 31000, 32000, 33000, 34000, 35000, 36000, 37000, 38000, 39000, 40000, 41000, 42000, 43000, 44000, 45000, 46000, 47000, 48000, 49000, 50000, 51000, 52000, 53000, 54000, 55000, 56000, 57000, 58000, or 59000. The range may be, for example, 6000 to 59000.

Preferable examples of dicarboxylic acids include terephthalic acid, isophthalic acid, and orthophthalic acid. The dicarboxylic acid can be used singly or in a combination of two or more.

Preferable examples of glycols include ethylene glycol, diethylene glycol, polyethylene glycol, 1,3-propanediol, 1,4-butanediol, and 1,6-hexanediol. The glycol can be used singly or in a combination of two or more.

The composition of the present disclosure preferably contains the polyester resin in an amount of, for example, about 20 to 80 mass%. The upper limit or the lower limit of the range may be, for example, about 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, or 79 mass%. For example, the range may be 30 to 70 mass% or 40 to 60 mass%.

The aqueous medium of the composition of the present disclosure is preferably water, and can be any water of various kinds such as tap water, industrial water, ion-exchanged water, deionized water, or pure water. In particular, deionized water or pure water is preferable.

The composition of the present disclosure can be prepared, for example, by adding polyester resin to an aqueous medium and mixing them to disperse the polyester resin. A surfactant (emulsifier) may be used to aid dispersion during the mixing to the extent that the effects of the composition of the present disclosure are not impaired. The emulsifier is preferably, for example, polyvinyl alcohol. Alternatively, emulsifiers known in the art are also usable.

As noted above, the composition of the present disclosure preferably further contains polyvinyl alcohol, and a composition further containing polyvinyl alcohol can be preferably prepared by adding and mixing polyvinyl alcohol as an emulsifier during the mixing in the preparation.

In the present specification, the terms "comprise" and "contain" includes the concepts of consisting essentially of and consisting of. The present disclosure also encompasses any and all combinations of the elements described in the present specification.

The various characteristics (properties, structures, functions, etc.) described above for each embodiment of the present disclosure may be combined in any way in identifying the subject matter encompassed by the present disclosure. Specifically, the disclosure encompasses subject matter formed of any and every combination of the combinable characteristics described in the present specification.

### Examples

Embodiments of the present disclosure are described below in detail with reference to Examples. However, the embodiments of the present disclosure are not limited to the following Examples.

In the following study, the polyvinyl alcohol for use was Poval 40-80E in all cases (trade name, Kuraray Co., Ltd., degree of saponification: 79 to 81 mol%).

### Example 1

Two hoppers were attached to the first feed port located 80 mm from the upstream end of a twin-screw extruder (PCM-30, Ikegai Corp., L/D = 41.5, cylinder length: 1260 mm). Polyester (melting point: 95°C) was fed from one of the hoppers at 40 kg/hour, and polyvinyl alcohol was fed from the other hopper at 0.48 kg/hour.

Melt-kneading was performed at a cylinder temperature of 140°C and a rotation speed of 450 rpm until the mixture reached the second feed port located 480 mm from the upstream end of the twin-screw extruder, and an aqueous solution of 8 mass% polyvinyl alcohol was fed at 9.2 kg/hour from the second feed port with a plunger pump.

The mixture was kneaded and emulsified at a cylinder temperature of 120°C and a rotation speed of 450 rpm until the mixture reached the third feed port located 1000 mm from the upstream end of the twin-screw extruder from the second feed port. Pure water was fed at 29.5 kg/hour with a plunger pump from the third feed port, and then melt-kneading was performed at a cylinder temperature of 90°C and a rotation speed of 450 rpm until the mixture reached the outlet of the twin-screw extruder from the third feed port, followed by discharging a product from the twin-screw extruder. This operation was performed for 10 minutes until the operation stabilized, and then the switching valve was opened. The aqueous polyester resin dispersion was fed into a stirred tank (internal volume: 5L) equipped with a propeller stirrer (propeller diameter: 58 mm, 3 blades), and stirred at 500 rpm.

The dispersion stirred in the stirred tank was fed into the inlet of a condenser tube and cooled at a cooling temperature of 40°C, followed by discharging the dispersion from the outlet of the condenser tube located 10,800 mm from the inlet of the condenser tube.

Sodium pyrithione (trade name: Suraoff 28, Osaka Gas Chemicals Co., Ltd.) in an amount of 300 ppm relative to the dispersion discharged from the outlet of the condenser tube was added to the dispersion, thereby obtaining an aqueous polyester resin dispersion.

### Example 2

An aqueous polyester resin dispersion was obtained in the same manner as in Example 1, except that the amount of sodium pyrithione was changed to 500 ppm.

### Comparative Example 1

An aqueous polyester resin dispersion was obtained in the same manner as in Example 1, except that sodium pyrithione was not added.

### Comparative Example 2

An aqueous polyester resin dispersion was obtained in the same manner as in Example 1, except that 300 ppm of an isothiazolone preservative (trade name: Topcide 240, Permachem Asia Ltd.) was added instead of sodium pyrithione.

### Comparative Example 3

An aqueous polyester resin dispersion was obtained in the same manner as in Comparative Example 2, except that the isothiazolone preservative was added in an amount of 1000 ppm.

The aqueous polyester resin dispersions obtained in the Examples and Comparative Examples were evaluated for adhesiveness and storage stability (rot-proofness performance) in accordance with the following methods. Table 1 shows the obtained results.

### Adhesiveness

The aqueous polyester resin dispersions obtained in the Examples and Comparative Examples were individually applied to aluminum foil (width: 25 mm, thickness: 30 µm) with a coater (*Nippon Cedars Service K.K.,* bar coater No. 4) to give a thickness of about 4 µm on a dry film basis. The aluminum foil coated with the dispersion was dried by heating in an oven at 100°C for 1 minute, thereby forming a film.

Subsequently, polyvinyl chloride (PVC, width: 25 mm) was used as an adherend. The adherend was bonded to the obtained film by using a heat-sealing machine (trade name: TP-701, Tester Sangyo Co., Ltd.). The heat-sealing conditions were as follows: sealing temperature 140°C, sealing pressure 2 kg/cm², and sealing time 3 seconds. The obtained heat-sealing substrate (composed of PVC, the dispersion film, and aluminum foil, width: 25 mm) was determined to be a test specimen. After the test specimen was cooled, a T-peel test was performed on the test specimen with a tensile tester (trade name: autograph AGS-J, Shimadzu Corporation) at a tension rate of 50 mm/min to measure the peel strength and evaluate the adhesiveness of the film. The evaluation criteria were as follows.

### Adhesiveness

A: a peel strength of 15 N/25 mm or greater
B: a peel strength of lower than 15 N/25 mm

### Storage Stability (Rot-proofness Performance)

The aqueous polyester resin dispersions obtained in the Examples and Comparative Examples were allowed to stand at 25°C for 3 months, and then the decay of the aqueous polyester resin dispersions was evaluated by visual observation or by checking the odor. The evaluation criteria were as follows.
A: No mold growth and putrid odor are perceived.
B: Mold growth or putrid odor is perceived.

**Table 1**

| | Adhesiveness | Rot-proofness Performance |
|---|---|---|
| Example 1 | A (16.2 N/25 mm) | A |
| Example 2 | A (15.0 N/25 mm) | A |
| Comparative Example 1 | A (16.6 N/25 mm) | B |
| Comparative Example 2 | A (16.5 N/25 mm) | B |
| Comparative Example 3 | A (13.7 N/25 mm) | B |

## Claims

1. An aqueous polyester resin dispersion composition comprising pyrithione or a salt thereof.

2. The composition according to claim 1, comprising the pyrithione or a salt thereof in an amount of 100 to 1000 ppm.

3. The composition according to claim 1 or 2, further comprising polyvinyl alcohol.

4. The composition according to any one of claims 1 to 3, wherein the polyester is a copolymer of a dicarboxylic acid with a glycol.

5. The composition according to claim 4, wherein the dicarboxylic acid is at least one member selected from the group consisting of terephthalic acid, isophthalic acid, and orthophthalic acid, and the glycol is at least one member selected from the group consisting of ethylene glycol, diethylene glycol, polyethylene glycol, 1,3-propanediol, 1,4-butanediol, and 1,6-hexanediol.

6. The composition according to any one of claims 1 to 5, wherein the polyester resin is a resin containing polyester or a resin containing polyester and polyvinyl alcohol.
